# EUROPÄISCHE PATENTSCHRIFT

(11) **EP 3 953 155 B1**
(45) Veröffentlichungstag und Bekanntmachung des Hinweises auf die Patenterteilung: **14.01.2026**
(21) Anmeldenummer: 20722483.3
(22) Anmeldetag: 09.04.2020
(51) Int. Cl.: B29C 65/22, B29C 65/74, A47K 11/02

(54) **SCHWEISSEINHEIT**
WELDING UNIT
UNITÉ DE SOUDAGE

(30) Priorität: 12.04.2019 DE 102019109687
(43) Veröffentlichungstag der Anmeldung: 16.02.2022
(73) Patentinhaber: Clesana AG, 9472 Grabs (CH)
(72) Erfinder: FREI, Christian, 9463 Oberriet (CH); JUD, Remo, 9108 Jakobsbad (CH); KILGA, Marcel, 6845 Hohenems (AT)
(74) Vertreter: Witte, Weller & Partner Patentanwälte mbB
(86) Internationale Anmeldenummer: PCT/EP2020/060295
(87) Internationale Veröffentlichungsnummer: WO 2020/208213

(56) Entgegenhaltungen:
- EP-A1- 3 130 447
- DE-T2- 69 823 349
- GB-A- 1 164 368
- US-A1- 2012 080 418
- US-A1- 2015 164 293

## Beschreibung

Die Erfindung betrifft eine Schweißeinheit nach dem Oberbegriff des Anspruchs 1.

Schweißeinheiten zum Verschweißen von Folienschläuchen für eine wasserlose Toilette sind bekannt. Problematisch bei bekannten Schweißeinheiten ist, dass die Schweißmittel üblicherweise mit Abdeckungen versehen werden müssen, um ein einfaches und prozesssicheres Lösen von z.B. Folien oder Folienschläuchen zu gewährleisten. Diese Schweissmittelabdeckungen unterliegen einem Verschleiß und müssen mit erhöhtem Aufwand getauscht werden, wobei u.U. die komplette Schweißbacke ersetzt werden muss. Dies kann mit entsprechend hohen Kosten einhergehen.

Das Dokument US 2015/164293 A1 offenbart eine faltbare Filmkassette mit einem Kassettenboden, der aus einem ersten ringförmigen Körper mit einem im Wesentlichen L-förmigen Querschnitt besteht, der in seiner Mitte ein Loch aufweist, das einem Loch einer Toilette entspricht, und eine erste ringförmige vertikale Wand enthält, auf die eine Faltung angebracht werden kann Die Folie ist über deren Außenseite und eine horizontale Wand anzubringen, die sich von einem unteren Ende der ersten ringförmigen vertikalen Wand nach außen erstreckt. und eine Filmführung, die aus einem zweiten ringförmigen Körper besteht, der abnehmbar an einem oberen Ende der ersten ringförmigen vertikalen Wand montiert ist, auf der der Film angebracht wurde, und einen äußeren Flansch umfasst, in dem sich der Faltfilm befindet, der im Kassettenboden gehalten wird Von einer Außenkante des Außenflansches der Filmführung aus ausgedehnt und in das Loch des Kassettenbodens eingeführt.

Weiterhin offenbart das Dokument EP 3 130 447 A1 einen Schweißbalken für eine Vakuumschublade zum Vakuumieren von Lebensmitteln, mit einem Grundträger wenigstens einen Heizdraht umfassend sowie mit einem Rahmenteil mit integrierter Antihaftbeschichtung, wobei das Rahmenteil lösbar am Grundträger befestigbar ist.

Weiterhin offenbart das Dokument DE 698 23 349 T2 ein elektrisches Handschweißgerät, umfassend ein Gehäuse, eine Heizeinheit, die in dem Gehäuse montiert ist und einen elektrischen Heizdraht beinhaltet, eine hitzebeständige Abdeckfolie, die zumindest einen Bereich des elektrischen Heizdrahts abdeckt und eine Presseneinheit, die schwenkbar mit dem Gehäuse verbunden ist und gegen die Heizeinheit wirkt, dadurch gekennzeichnet , dass eine hitzeisolierende Basis einen vorragenden Bereich aufweist, auf welchem der elektrische Heizdraht montiert ist, und die hitzebeständige Abdeckplatte innerhalb eines Rahmens gehalten ist, der Rückhaltemittel umfasst, so dass die hitzebeständige Abdeckfolie entfernbar über dem vorragenden Bereich und über zumindest dem besagten Bereich des elektrischen Heizdrahts so gesichert ist, dass die Abdeckfolie zum Austauschen entfernt werden kann, ohne die Presseneinheit vom Gehäuse zu trennen.

Weiterhin offenbart das Dokument GB 1 164 368 A eine Schweißmaschine zum Herstellen von Beuteln, Beuteln und ähnlichen Behältern aus Kunststoffmaterial, bestehend aus einer Schweißbacke, einem Schweißwiderstand und einer dazwischen angeordneten elastischen Dichtung, wobei sich zwischen dem Widerstand ein Streifen aus wärmeleitendem Material mit einer Dicke von 0,01 bis 0,5 mm befindet.

Weiterhin offenbart das Dokument US 2012/080418 A1 ein Heißsiegelgerät umfassend einen Pressmechanismus, eine Heizung und einen Stromkreis. Die Heizung umfasst eine dünne thermischelektrische Isolierplatte, die auf einer wärmeableitenden Basis oder auf einer Backe des Pressmechanismus liegt; einen oder mehrere Heizdrähte, von denen jeder eine dünne Widerstandsplatte aus Metall ist, die auf der dünnen thermisch-elektrischen Isolatorplatte liegt, wobei jeder Heizdraht eine Elektrode und einen wärmeerzeugenden Abschnitt enthält; einen wärmeleitenden elektrischen Isolator, der über dem wärmeerzeugenden Abschnitt liegt, wobei der wärmeleitende elektrische Isolator ein elektrischer Isolator ist und eine Wärmeleitfähigkeit aufweist, die gleich oder höher als die von Aluminiumoxid ist; einen thermisch-elektrischen Isolator, der freiliegende Teile der Heizdrähte und der Elektrode bedeckt; und einen dünnen Trennfilm, der auf dem wärmeleitenden elektrischen Isolator liegt. Die Elemente des Heizgeräts werden so hergestellt, dass sie in engem Kontakt zueinander stehen und mithilfe eines Klebstoffs oder Ähnlichem befestigt werden.

Aufgabe der Erfindung ist es, eine verbesserte Schweißeinheit bereitzustellen, bei der ein vereinfachter Austausch der Schweissmittelabdeckungen ermöglicht wird.

Zur Lösung der Aufgabe wird eine Schweißeinheit zum Verschweißen von Folienschläuchen für eine wasserlose Toilette nach Anspruch 1 vorgeschlagen.

Hierdurch kann ein signifikant vereinfachter Austausch der Schweissmittelabdeckungen ermöglicht werden, welcher ggf. selbst durch den Nutzer, beispielsweise einen Endverbraucher vorgenommen werden kann.

In einer vorteilhaften Weiterbildung der Erfindung kann vorgesehen sein, dass die Schweissmittelabdeckungen formschlüssig mit den Schweißbacken verbunden sind.

Das Lösen einer formschlüssigen Verbindung benötigt i.d.R. keine besonderen Hilfsmittel oder nur solche, welche einem Nutzer üblicherweise zur Verfügung stehen. Beispielsweise sind oftmals einfache Hebelwerkzeuge oder nur die reine Kraft der Hände eines Nutzers ausreichend. Hierdurch wird neben vereinfachtem Austausch auch eine stabile Befestigung der Schweissmittelabdeckungen an den Schweißbacken ermöglicht.

Eine überdies bevorzugte Ausgestaltung der Erfindung kann vorsehen, dass die Schweissmittelabdeckungen je ein Rahmenelement umfassen, wobei die Rahmenelemente als steckbare Rahmenelemente ausgebildet sind und Steckmittel umfassen, die in Ausnehmungen der Schweißbacken angeordnet sind.

Da die Schweissmittelabdeckungen üblicherweise auf der Kontaktseite mit den zu verschweißenden Folien besondere Antihaft-Beschichtungen in Form von Oberflächenbeschichtungen oder Bändern aufweisen, ist ein Rahmenelement zur Bereitstellung der notwendigen Stabilität der Schweissmittelabdeckung vorteilhaft. Neben einer signifikant vereinfachten Austauschmöglichkeit kann eine stabile Befestigung der Schweissmittelabdeckungen an den Schweißbacken ermöglicht werden.

In einer vorteilhaften Ausgestaltung der Erfindung kann vorgesehen sein, dass die Schweissmittelabdeckungen als manuell ablängbare Schweissmittelabdeckungen ausgebildet sind.

Somit können die Schweißmittel entsprechend der benötigten Dimension, d.h. Länge bzw. Breite, einfach bereitgestellt werden. Dazu ist vorgesehen, dass die Schweissmittelabdeckungen mit den allen Komponenten, z.B. Rasthaken oder anderen Befestigungsmitteln in Längsrichtung periodisch oder durchgehend ausgestattet sind, so dass ein einfaches händisches Ablängen, z.B. abschneiden auf die benötigte Länge ermöglicht wird.

In einer vorteilhaften Ausgestaltung der Erfindung kann vorgesehen sein, dass die Schweißmittelabdeckungen als PTFE Abdeckungen, insbesondere als mit PTFE beschichtete Glasgewebebänder ausgebildet sind.

Hierdurch wird ein besonders effizientes Verschweißen der Folienschläuche erzielbar bei gleichzeitiger prozesssicherer Ablösbarkeit der verschweißten Folien von den Schweißbacken. Derartige Bänder lassen sich überdies gut händisch schneiden und trennen und stellen bei der Handhabung und Montage kein besonders komplex zu behandelndes, empfindliches Gut dar.

Entgegen dem Stand der Technik, welcher für die Trennung einen Schweissdraht und für die Schweissung zwei parallel Heizbänder vorsieht, ist vorliegend nur ein einziges Sickenband das sowohl schweissen als auch trennen kann vorgesehen, je nachdem wie die Betriebstemperatur über eine Steuerung oder Regelung eingestellt ist.

Hierdurch kann das Trennen und Schweißen mit einer geringeren Anzahl von Bauteilen ausgeführt werden, wodurch die Schweißmittel weniger fehleranfällig werden.

Haken bilden eine einfache, bekannte und bei der Anbringung durch die Rückmeldung des Einrastens prozesssichere Befestigung für die austauschbaren Schweißmittelabdeckungen aus.

Eine weiter bevorzugte Ausführungsform sieht vor, dass die Schweißbacke mindestens eine Vertiefung umfasst, um durch Eingriff eines Werkzeugs ein hebelndes Lösen einer kraftschlüssigen und/oder formschlüssigen Verbindung zwischen Schweißbacke und Schweißmittelabdeckung zu ermöglichen.

Die Erfindung sieht auch eine wasserlose Toilette vor, die dadurch gekennzeichnet ist, dass eine erfindungsgemäße Schweißeinheit umfasst ist.

Die vorstehend geäußerten Vorteile gelten dabei analog.

Nachstehend wird die Erfindung anhand von Zeichnungen näher erläutert. Hierbei zeigt:
- Fig. 1:: einen Ausschnitt einer schematische Darstellung einer erfindungsgemäßen Schweißeinheit;
- Fig. 2:: die in Fig. 1 gezeigte Schweißeinheit in einer schematischen Schnittdarstellung;
- Fig. 3:: einen Schnitt durch eine Schweißbacke in schematischer Darstellung.

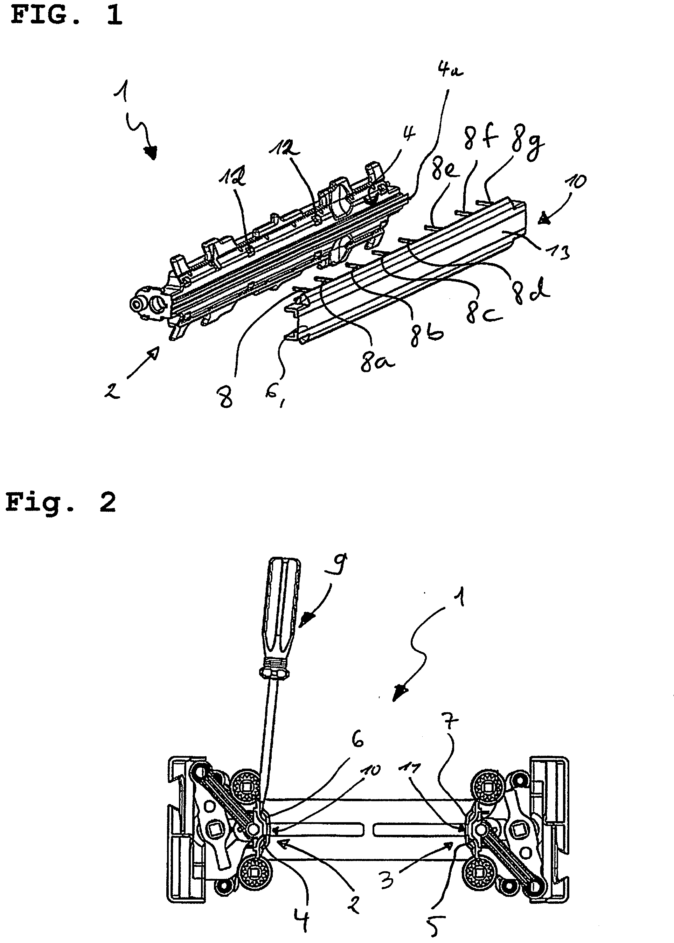

In den Fig. 1 und 2 ist jeweils eine Schweißeinheit 1 zum Verschweißen von Folienschläuchen (nicht gezeigt) für eine wasserlose Toilette (nicht gezeigt) dargestellt. Die Schweißeinheit 1 umfasst eine Schweißbacke 2. Die Schweißbacken 2 umfasst ein Schweißmittel 4 sowie ein Sickenband 4a (siehe Fig. 2 für entsprechende Bauteile 3, 5). Die Schweißmittel 4, 5 sind zum Verschweißen von Folienschläuchen ausgebildet.

Im Sinne der Erfindung vorgesehen ist, dass die Schweißmittel 4, 5 mit lösbar an den Schweißbacken 2, 3 befestigten Schweißmittelabdeckungen 10, 11 versehen sind. angeordnet, insbesondere mit den Schweißbacken 2, 3 verbunden sind. Dies ist in Fig. 2 näher gezeigt. Durch das lösbare Verbinden der Schweißmittelabdeckungen 10, 11an bzw. mit den Schweißbacken 2, 3 kann erreicht werden, dass die Schweißmittelabdeckungen 10, 11einfach ausgetauscht werden können.

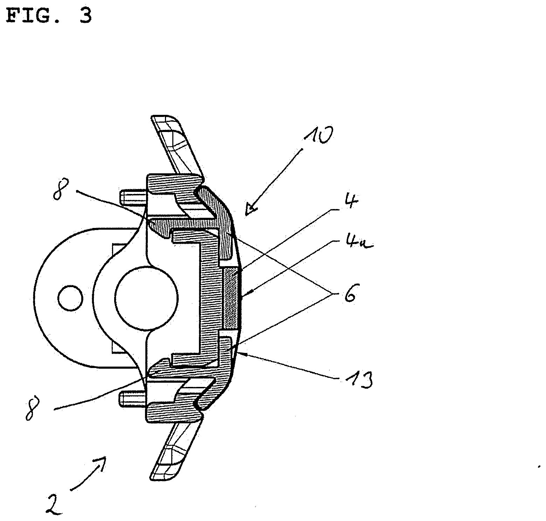

Vorliegend sind Schweißmittelabdeckungen 10, 11formschlüssig mit den Schweißbacken 2, 3 verbunden. Insbesondere umfassen die Schweißmittelabdeckungen 10, 11je ein Rahmenelement 6, 7, wobei die Rahmenelemente 6, 7 als steckbare Rahmenelemente 6, 7 ausgebildet sind und Steckmittel 8, 8a-g umfassen (siehe Fig. 1), die in Ausnehmungen der Schweißbacken 2, 3 eingerastet sind. Die Steckmittel 8 sind vorliegend als Rasthaken (siehe Fig.3) ausgebildet. Sie sind bevorzugt einstückig mit dem Rahmenelement 6 an dessen oberer und unterer Längsseite in periodischen Abständen ausgeformt.

Wie in der Fig. 2 gezeigt ist, können die Rahmenelemente 6, 7 und damit die Schweißmittelabdeckungen 10, 11beispielsweise mit einem Schraubenzieher oder dergleichen Werkzeug 9 von den Schweißbacken 2, 3 mit geringen Aufwand abgelöst werden. Dazu ist in den Schweißbacken 2,3 eine Vertiefung 12 vorgesehen, welche ein gutes Hintergreifen der Schweißmittelabdeckungen 10, 11 ermöglicht, um die Hebelwirkung in Längsrichtung der Rasthaken 8 auszubilden.

Die Rahmenelemente 6, 7 zeichnen sich hierbei auch dadurch aus, dass sie einfach herstellbar sind und eine gleichmäßige und stabile Befestigung der Schweißmittelabdeckungen 10, 11über eine gesamte Länge der Schweißbacken 2, 3 ermöglichen.

In Fig. 3 ist überdies erkennbar, dass über das Rahmenelement 6 ein PTFE beschichtetes Glasgewebeband 13 gespannt ist. Das PTFE beschichtete Glasgewebeband 13 ist dabei bevorzugt auf das Rahmenelement 6 als Träger aufgeklebt und kann mit einfachen Mitteln, z.B. einer stabilen Schere oder dergleichen, mitsamt dem Rahmenelement 6 durch den Nutzer abgelängt werden.

### Bezugszeichenliste:

- 1: Schweißeinheit
- 2: Schweißbacke
- 3: Schweißbacke
- 4: Schweißmittel
- 5: Schweißmittel
- 6: Rahmenelement
- 7: Rahmenelement
- 8: Steckmittel
- 8a: Steckmittel
- 8b: Steckmittel
- 8c: Steckmittel
- 8d: Steckmittel
- 8e: Steckmittel
- 8f: Steckmittel
- 8g: Steckmittel
- 9: Werkzeug
- 10: Schweißmittelabdeckung
- 11: Schweißmittelabdeckung
- 12: Vertiefung
- 13: PTFE-Glasgewebenand

## Patentansprüche

1. Schweißeinheit (1) zum Verschweißen von Folienschläuchen für eine wasserlose Toilette, wobei die Schweißeinheit (1) Schweißbacken (2, 3) umfasst, **dadurch gekennzeichnet, dass** die Schweißbacken (2, 3) Schweißmittelabdeckungen (10, 11) umfassen, dass die Schweißmittelabdeckungen (10, 11) lösbar an den Schweißbacken (2, 3) angeordnet, insbesondere mit den Schweißbacken (2, 3) lösbar verbunden sind, dass die Schweißmittelabdeckungen (10, 11) Haken umfassen, und die Haken als flexible Rastelemente an der Schweißbacke einrasten, und dass an der Schweißeinheit Schweißmittel ausgebildet sind und die Schweißmittel als ein einziges Sickenband zum Trennen bzw. Schneiden und Schweißen bzw. Verbinden durch Verschmelzen ausgebildet sind.

2. Schweißeinheit (1) nach Anspruch 1, wobei die Schweißmittelabdeckungen (10, 11) formschlüssig mit den Schweißbacken (2, 3) verbunden, insbesondere über Rastverbindungen sind.

3. Schweißeinheit (1) nach Anspruch 1 oder 2, wobei die Schweißmittelabdeckungen (10, 11) je ein Rahmenelement (6, 7) umfassen, wobei die Rahmenelemente als steckbare Rahmenelemente (6, 7) ausgebildet sind und Steckmittel (8, 8a-g) umfassen, die in Ausnehmungen der Schweißbacken (2, 3) angeordnet sind.

4. Schweißeinheit (1) nach einem der vorangehenden Ansprüche, wobei die Schweißmittelabdeckungen (10, 11) als ablängbare Schweißmittelabdeckungen (10, 11) ausgebildet sind.

5. Schweißeinheit (1) nach einem der vorangehenden Ansprüche, wobei die Schweißmittelabdeckungen (10, 11) als PTFE Abdeckungen. Insbesondere als mit PTFE beschichtete Glasgewebebänder ausgebildet sind.

6. Schweißeinheit (1) nach einem der vorangehenden Ansprüche, wobei die Schweißbacke mindestens eine Vertiefung umfasst, um durch Eingriff eines Werkzeugs ein hebelndes Lösen einer kraftschlüssigen und/oder formschlüssigen Verbindung zwischen Schweißbacke und Schweißmittelabdeckung zu ermöglichen.

7. Wasserlose Toilette, **dadurch gekennzeichnet, dass** die wasserlose Toilette eine Schweißeinheit (1) umfasst, die nach einem der Ansprüche 1 bis 6 ausgebildet ist.

## Claims

1. A welding unit (1) for the welding of film tubes for a waterless toilet, the welding unit (1) comprising welding jaws (2, 3), **characterized in that** the welding jaws (2, 3) comprise welding means covers (10, 11), that the welding means covers (10, 11) are detachably arranged on the welding jaws (2, 3), in particular are detachably connected to the welding jaws (2, 3), that the welding means covers (10, 11) comprise hooks, and the hooks latching into place as flexible latching elements on the welding jaw, and that welding means are provided on the welding unit, and the welding means being configured as a single beaded tape for separation or cutting and welding or connection by fusing.

2. The welding unit (1) as claimed in claim 1, the welding means covers (10, 11) being connected to the welding jaws (2, 3) in a form-fitting manner, in particular by means of latching connections.

3. The welding unit (1) as claimed in claim 1 or 2, the welding means covers (10, 11) each comprising a frame element (6, 7), the frame elements being configured as plug-in frame elements (6, 7) and comprising plug-in means (8, 8a-g) which are arranged in apertures of the welding jaws (2, 3).

4. The welding unit (1) as claimed in one of the preceding claims, the welding means covers (10, 11) being configured as welding means covers (10, 11) which can be cut to length.

5. The welding unit (1) as claimed in one of the preceding claims, the welding means covers (10, 11) being configured as **PTFE** covers, in particular as woven glass fabric tapes coated with PTFE.

6. The welding unit (1) as claimed in one of the preceding claims, the welding jaw comprising at least one indentation in order to make it possible for a force-fitting and/or form-fitting connection between the welding jaw and the welding means cover to be detached in a levered manner by the engagement of a tool.

7. A waterless toilet, **characterized in that** the waterless toilet comprises a welding unit (1) which is configured as claimed in one of claims 1 to 6.

## Revendications

1. Unité de soudage (1) pour le soudage de tubes en film pour des toilettes sèches, dans laquelle l'unité de soudage (1) comprend des mâchoires de soudage (2, 3), **caractérisée en ce que** les mâchoires de soudage (2, 3) comprennent des éléments de recouvrement de moyens de soudage (10, 11), **en ce que** les éléments de recouvrement de moyens de soudage (10, 11) sont disposés de manière amovible sur les mâchoires de soudage (2, 3), en particulier sont reliés de manière amovible aux mâchoires de soudage (2, 3),
**en ce que** les éléments de recouvrement de moyens de soudage (10, 11) comprennent des crochets, et les crochets s'encliquettent, sous forme d'éléments d'encliquetage flexibles, sur la mâchoire de soudage,
et **en ce que** des moyens de soudage sont réalisés sur l'unité de soudage et les moyens de soudage sont réalisés sous la forme d'une seule bande à moulures pour la séparation ou la division et le soudage ou la liaison par fusion.

2. Unité de soudage (1) selon la revendication 1, dans laquelle les éléments de recouvrement de moyens de soudage (10, 11) sont reliés par complémentarité de forme aux mâchoires de soudage (2, 3), en particulier par l'intermédiaire de liaisons par encliquetage.

3. Unité de soudage (1) selon la revendication 1 ou 2, dans laquelle les éléments de recouvrement de moyens de soudage (10, 11) comprennent respectivement un élément formant cadre (6, 7), dans laquelle les éléments formant cadres sont réalisés sous la forme d'éléments formant cadres enfichables (6, 7) et comprennent des moyens d'enfichage (8, 8a-g) disposés dans des évidements des mâchoires de soudage (2, 3).

4. Unité de soudage (1) selon l'une des revendications précédentes, dans laquelle les éléments de recouvrement de moyens de soudage (10, 11) sont réalisés sous forme d'éléments de recouvrement de moyens de soudage (10, 11) pouvant être découpés en longueur.

5. Unité de soudage (1) selon l'une des revendications précédentes, dans laquelle les éléments de recouvrement de moyens de soudage (10, 11) sont réalisés sous forme d'éléments de recouvrement en PTFE, en particulier sous forme de bandes de tissu de verre revêtues de PTFE.

6. Unité de soudage (1) selon l'une des revendications précédentes, dans laquelle la mâchoire de soudage comprend au moins un renfoncement afin de permettre, par la mise en prise d'un outil, un dégagement par effet de levier d'une liaison par adhérence et/ou par complémentarité de forme entre la mâchoire de soudage et l'élément de recouvrement de moyens de soudage.

7. Toilettes sèches, **caractérisées en ce que** les toilettes sèches comprennent une unité de soudage (1) réalisée selon l'une des revendications 1 à 6.
